(19) Europäisches Patentamt
European Patent Office
Office européen des brevets

(11) Publication number: 0 235 908 A2

(12) # EUROPEAN PATENT APPLICATION

(21) Application number: 87300603.5

(22) Date of filing: 23.01.87

(51) Int. Cl.⁴: C 25 B 3/04, A 23 L 1/227, C 07 C 149/243

(30) Priority: 23.01.86 GB 8601582

(43) Date of publication of application: 09.09.87 Bulletin 87/37

(84) Designated Contracting States: CH DE FR GB IT LI NL

(71) Applicant: THE ELECTRICITY COUNCIL, 30 Millbank, London, SW1P 4RD (GB)

(72) Inventor: Millington, James Peter, 16 Valley Road, Weaverhanm Cheshire CW8 3PP (GB)
Inventor: Hughes, David Anthony, Burleigh Bradley Lane, Frodsham Cheshire (GB)

(74) Representative: Hardisty, David Robert et al, BOULT, WADE & TENNANT 27 Furnival Street, London EC4A IPQ (GB)

(54) **Method for the production of L-cysteine.**

(57) This present invention relates to a method for the production of L-cysteine by the electrochemical reduction of L-cystine using an electrochemical cell, which cell comprises an anode separated from a cathode by a cation-selective membrane, wherein the anolyte comprises a source of hydrogen ions, for example hydrochloric acid, and the catholyte comprises a solution of L-cystine in hydrochloric acid, or the like, and both the anolyte and the catholyte are circulated through the cell while electric current is passed there through, said cell being generally of the kind described in EP-A-0 064 417.

EP 0 235 908 A2

METHOD FOR THE PRODUCTION OF L-CYSTEINE

The present invention is concerned with a method for the production of L-cysteine and more particularly to an electrochemical method for the production of L-cysteine by the electrochemical reduction of L-cystine.

Cysteine is a sulphur containing amino-acid which is unstable in neutral or alkaline solution. It has been prepared previously by the reduction of the naturally occurring dimeric amino acid L-cystine. The chemical reduction of L-cystine has been effected as is reported in the Journal of the American Chemical Society, 52, 4500, 1930, using sodium in liquid ammonia. Further, L-cysteine has also been prepared by an electrochemical reduction, the details of several processes are to be found in the prior literature.

The electrochemical reduction of L-cystine may be represented by the equation:

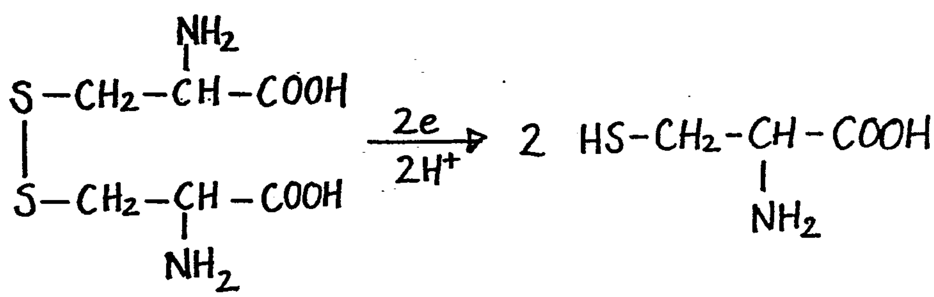


One previously described electrochemical method for the production of L-cysteine is described in the Journal of the Chinese Chemical Society, 25, pp 149-151, 1977, and this method uses a two compartment tank cell incorporating stainless steel anodes and cathodes and a porous glass separator. This electrochemical cell was operated at 300-400 $A/m^2$

with a cell potential of 5 volts and the chemical yield of this method was 92%.

A somewhat similar method has been described in Japanese Patent Application No. 1980-44568, and the inventors used a conventional divided plate and frame cell with lead anodes and cathodes and a cation selective membrane as the cell divider. Current densities were employed in the range 200 to 700 $A/m^2$ resulting in corresponding cell voltages of 2.5 to 3.5 V. The cell was operated with an electrolyte flow of 0.5 to 1.5 m/s and at higher value current efficiencies of 93%, and chemical yields of 95.6% were observed.

We have now surprisingly found that high chemical yields could be obtained not only at low current density, as was the case with the prior methods for the production of L-cysteine previously reported, but at higher current densities which are accordingly more significant commercially. These surprising results were obtained using an electrochemical cell which is described in our European Patent Application No. 82302327.0 (Publication No. 0 064 417).

According to the present invention there is provided a method for the production of L-cysteine by the electrochemical reduction of L-cystine using an electrochemical cell, which cell comprises an anode separated from a cathode by a cation-selective membrane, wherein the anolyte comprises a source of hydrogen ions, for example hydrochloric acid, and the catholyte comprises a solution of L-cystine in hydrochloric acid, or the like, and both the anolyte and the catholyte are circulated through the cell while electric current is passed there through, said cell being generally of the kind described in

EP-A-0 064 417.

According to a preferred embodiment of the present invention, the method is carried out at a current density of from 500 to 4000 $A/m^2$ preferrably from 800 or 1000 to 3500 $A/m^2$.

There is now shown in the Figure a block diagram of the cell flow circuit. The cell is provided with separate anolyte and catholyte compartments and had a membrane dividing the two.

Referring to the drawings, the cell consisted of a dished anode 11, separated from the corresponding dished cathode 3 by a cation selective membrane 4. The two electrodes were held in corresponding anode 13 and cathode 6 frames and supported in a press by two end pieces 2 and 9. The anode was constructed from titanium electroplated with platinum or the same substrate bearing a fired coating of mixed platinum and iridium oxides and the cathode from titanium grade 115. The membrane in this case was a proprietary grade, Nafion 324, and the cell frame and end plates constructed from PVC.

The anode chamber contained a mesh type turbulence promoter located between the anode 11 and the cation selective membrane 4.

The anolyte was circulated from the anolyte tank 10 by means of the anolyte pump 16 through the cell and returned to the anolyte tank. A similar circuit for the catholyte was provided, circulation being from the catholyte tank 1 via the pump 17 through the cell and returning to the tank as before. The flow in each circuit was monitored by means of flow meters 14 and 7. In addition each circuit contained a heat exchanger which could be used for either heating or cooling in order to control the temperature of the

electrolyte.

In using the electrochemical cell as described in European Patent Publication No. 0 064 417 and as more particularly described above, the anolyte and catholyte tanks were charged with 17 litres of 1.25 molar hydrochloric acid and 15 litres containing 3.55 kg L-cystine HCl (prepared by dissolving the free base in approximately 15 litres of 1.25 M HCl), respectively. The pumps were then started to circulate the fluid and the rectifier was started to apply current to the cell. The flow of the catholyte wad adjusted to correspond to a linear flow of 0.3 m/s and the rectifier adjusted to give a current of 100 A (2000 A/$m^2$). During the electrolysis the current potential, flow rate and L-cystine concentration were monitored. When the L-cystine concentration had reached a value below 5 g/l the current was switched off after 8 hours 5 minutes of electrolysis. The catholyte was then pumped into a rotary evaporator and evaporation of the catholyte solvent yielded 3.47 kg of pure crystalline L-cysteine hydrochloride.

The chemical yield for this electrolysis was 97% and the current efficiency was 73%.

It is convenient when comparing different methods for the production of chemical substances by electrolysis to calculate the production rate in kg/$m^2$/h and this can be calculated by the following:

$$\frac{\text{Current density x cell potential}}{\text{Power Consumption}}$$

where the current density is expressed in $A/m^2$, the cell potential in volts and the power comsumption for the production of the product in kWh/kg. Using this method of calculation, the electrolysis to produce L-cysteine using the cell and conditions described above provides the production rate of 8.32 $kg/m^2/h$ with a power consumption of 0.913 kwh/kg. A corresponding calculation with the method described in the prior Japanese Patent Application No. 1980-44568 results in a production rate of 0.952 $kg/m^2/h$ with a power consumption of 0.476 kWh/kg. Accordingly it can be seen that the production rate using the cell described above in our present method for. the electrolytic production of L-cysteine is nearly 9 times that achieved by the method of the Japanese patent application. Clearly this comparison shows that in accordance with the present invention there is a considerable economic advantage to be obtained in using our new method for the producton of L-cysteine. As noted above the anodes were produced by electroplating platinum onto the substrate, and accordingly the fact that such economic production of L-cysteine can be achieved in accordance with our invention the fact that smaller platinum coated electrodes can be used is of vital importance.

One commercial use of the L-cysteine produced according to this invention is as a flavour-enhancing additive for various kinds of meat including fish and fowl. it is particularly useful as an additive for pet food.

A further commerical use of the L-cysteine produced according to this invention is as an intermediate in the preparation of S-carboxymethyl-cysteine which is of use as a decongestant.

CLAIMS

1. A method for the production of L-cysteine by the electrochemical reduction of L-cystine using an electrochemical cell, which cell comprises an anode separated from a cathode by a cation-selective membrane, wherein the anolyte comprises a source of hydrogen ions, for example hydrochloric acid, and the catholyte comprises a solution of L-cystine in hydrochloric acid, or the like, and both the anolyte and the catholyte are circulated through the cell while electric current is passed there through, said cell being generally of the kind described in EP-A-0 064 417.

2. A method as claimed in claim 1 wherein the anode is made from titanium electroplated with platinum.

3. A method as claimed in claim 1 wherein the anode is made from titanium bearing a fired coating of platinum and iridium oxides.

4. A method as claimed in any one of claims 1 to 3 wherein the current density is from 500 to 4000 $A/m^2$.

5. A method as claimed in claim 4 wherein the current density is from 800 to 3500 $A/m^2$.

6. The use of L-cysteine produced by a method as claimed in any one of claims 1 to 5 as a flavour-enhancing additive for meat.

7. The use of L-cysteine produced by a method as claimed in any one of claims 1 to 5 as an intermediate in the preparatin of S-carboxymethyl cysteine.